(19) Europäisches Patentamt
European Patent Office
Office européen des brevets

(11) **EP 4 278 162 B1**

(12) **EUROPÄISCHE PATENTSCHRIFT**

(45) Veröffentlichungstag und Bekanntmachung des Hinweises auf die Patenterteilung:
**02.07.2025 Patentblatt 2025/27**

(21) Anmeldenummer: **21844776.1**

(22) Anmeldetag: **29.12.2021**

(51) Internationale Patentklassifikation (IPC):
**G01M 3/00** *(2006.01)* **G01M 3/38** *(2006.01)*

(52) Gemeinsame Patentklassifikation (CPC):
**G01M 3/20; G01M 3/002; G01M 3/38**

(86) Internationale Anmeldenummer:
**PCT/EP2021/087812**

(87) Internationale Veröffentlichungsnummer:
**WO 2022/152564 (21.07.2022 Gazette 2022/29)**

(54) **VERFAHREN ZUR DETEKTION VON AUS EINEM PRÜFLING AUSTRETENDEM PRÜFGAS MIT EINEM OPTISCHEN SENSOR**

METHOD FOR DETECTING TEST GAS EXITING A TEST BODY USING AN OPTICAL SENSOR

PROCÉDÉ DE DÉTECTION DE GAZ D'ESSAI SORTANT D'UN CORPS D'ESSAI À L'AIDE D'UN CAPTEUR OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.01.2021 DE 102021100405**

(43) Veröffentlichungstag der Anmeldung:
**22.11.2023 Patentblatt 2023/47**

(73) Patentinhaber: **Inficon GmbH 50968 Köln (DE)**

(72) Erfinder: **WETZIG, Daniel 50968 Köln (DE)**

(74) Vertreter: **dompatent von Kreisler Selting Werner - Partnerschaft von Patent- und Rechtsanwälten mbB Deichmannhaus am Dom Bahnhofsvorplatz 1 50667 Köln (DE)**

(56) Entgegenhaltungen:
**US-A- 5 523 569 US-A1- 2019 078 966 US-B1- 10 031 040**

**Beschreibung**

Die Erfindung betrifft ein Verfahren zur Detektion von aus einem Prüfling austretendem Prüfgas.

Die Detektion von aus einem Prüfling austretendem Prüfgas wird dazu verwendet, um ein Leck in dem Prüfling zu erkennen. Insbesondere stationäre oder besonders große Prüflinge werden nicht in einer Prüfkammer untersucht, sondern typischerweise mit Hilfe einer handgeführten Schnüffelsonde. Die Schnüffelsonde wird von dem Bediener an die zu untersuchende Prüfstelle des Prüflings herangeführt. Die Schnüffelsonde saugt kontinuierlich Luft über eine Einlassöffnung der Schnüffelsonde ein. Die eingesogene Luft wird zu einem Gasdetektor geleitet, der das Leckagegas selektiv nachweisen kann. Das Leckagegas, also das aus einem Leck im Prüfling austretende Gas, ist typischerweise ein bekanntes Prüfgas, mit dem der Prüfling befüllt wird oder das in dem Prüfling bereits vorhanden ist. Tritt Prüfgas aus einem Leck an der Prüfstelle aus, so wird das Leckagegas zusammen mit der Luft der Umgebung der Prüfstelle eingesogen, so dass ein Gasgemisch aus Luft und Prüfgas zu dem Detektor geleitet wird. Die Konzentration des Prüfgases im angesaugten Schnüffelgasstrom ist sowohl von der Leckagerate als auch von der Größe des kontinuierlich eingesogenen Luftstroms abhängig. Je geringer die Leckrate und je größer der eingesogene Luftstrom, desto geringer ist die Prüfgaskonzentration in dem angesaugten Gasstrom.

Es ist ferner bekannt, mit Hilfe von thermografischen Infrarotkameras Gaswolken zu detektieren, die ein infrarotaktives Gas aufweisen, d.h. ein Gas, dessen Absorptionsspektrum Infrarotwellenlängen aufweist. Dabei wird der auf das Sensorfeld der Kamera treffende Wellenlängenbereich mit einem optischen Filter eingeschränkt, wobei der Durchlassbereich des Filters das Absorptionsspektrum oder eine Absorptionsbande des zu detektierenden Gases enthält und andere Wellenlängenbereiche sperrt. Wenn nun die Kamera auf eine entsprechende Gaswolke gerichtet wird, erscheinen die durch die Gaswolke transmittierten Strahlungsanteile im Bereich des infraroten Absorptionsspektrums dunkler als die vom Hintergrund reflektierte Strahlung. Dadurch erscheint die Gaswolke als abgedunkelter Bereich im Bild der Infrarotkamera.

Bekannt ist es beispielsweise bei der Kamera FLIR GF320, die einzelnen Bildpunktamplituden aufeinanderfolgender Bilder zu subtrahieren, wodurch Bewegungen einer Gaswolke verstärkt dargestellt werden.

In US 2003/0025081 A ist ein Verfahren zur quantitativen Darstellung von Gasemissionen unter Verwendung einer Infrarotkamera beschrieben.

Die Abbildung von Bewegungen von Gaswolken im Infrarotbild ist beschrieben in WO 2018/45107 A1, EP 3 392 635 A1 und EP 3 351 916 A1.

US 2019/0078966 A1 beschreibt ein Verfahren zum Schätzen der Position eines Gaslecks in einem optischen Bild.

US 5,523,569 A beschreibt eine Vorrichtung zur automatisierten Gasleckerkennung anhand optischer Bilder.

US 10,031,040 B1 beschreibt ein System zur Gasleckanalyse unter Anwendung von maschinellem Lernen.

Der Erfindung liegt die Aufgabe zugrunde, ein verbessertes automatisiertes Verfahren zur Detektion von aus einem Prüfling austretendem Prüfgas bereitzustellen.

Das erfindungsgemäße Verfahren ist definiert durch die Merkmale von Anspruch 1.

Demnach wird zunächst optische Strahlung, die von dem zu untersuchenden Prüfling reflektiert oder emittiert wird, mit einem optischen Sensor, zum Beispiel einem digitalen Sensor oder einem CCD-Chip, aufgenommen. Der Sensor ist dazu ausgebildet, mindestens eine Wellenlänge des optischen Absorptionsspektrums des Prüfgases zu erfassen. Vorzugsweise wird ein Prüfgas mit einem Absorptionsspektrum im Bereich infraroter Wellenlängen verwendet. Der Sensor kann durch eine geeignete Optik dazu ausgebildet sein, die mindestens eine Wellenlänge des Absorptionsspektrums zu erfassen, zum Beispiel durch Verwendung eines geeigneten optischen Filters in dem Strahlengang zwischen Prüfling und Sensor, um Wellenlängen außerhalb des Absorptionsspektrums auszublenden. Beispielsweise kann der Durchlassbereich eines solchen optischen Filters das Absorptionsspektrum oder eine Absorptionsbande beinhalten, während der Sperrbereich des Filters die Bereiche der angrenzenden übrigen Wellenlängen abdeckt.

Dem liegt der Gedanke zugrunde, dass optische Strahlung, die von dem zu untersuchenden Prüfling reflektiert oder emittiert wird, aufgenommen und ausgewertet wird, um anhand des aufgenommenen Strahlungsspektrums zu ermitteln, ob die Strahlung durch Prüfgas transmittiert ist, um so auf das Vorhandensein von Prüfgas zu schließen.

Die optische Strahlung wird zu einem ersten Zeitpunkt aufgenommen und anschließend auch noch zu einem dem ersten Zeitpunkt nachfolgenden zweiten Zeitpunkt aufgenommen. Aus der zu den beiden Zeitpunkten aufgenommenen optischen Strahlung werden jeweils zwei digitale Bilder generiert, deren Bildpunkte Signalamplituden aufweisen, die der Amplitude mindestens einer Absorptionswellenlänge des Prüfgases an dem betreffenden Ort entsprechen. Der Bildpunkt an einem Ort, an dem kein Prüfgas vorhanden ist, weist demnach eine größere Signalamplitude auf als ein Bildpunkt, der einem Ort mit Prüfgas entspricht. An Orten mit Prüfgas wird Strahlung der Absorptionswellenlänge absorbiert, d.h. die Amplitude der durch das Prüfgas transmittierten Strahlung ist geringer als die Amplitude von Strahlung, die nicht durch das Prüfgas transmittiert ist. Die einen Ort mit Prüfgas abbildenden Bildpunkte weisen daher bei homogener Beleuchtung eine geringere Signalamplitude auf als Bildpunkte eines Ortes ohne Prüfgas.

Die Besonderheit der Erfindung besteht darin, dass zwischen den Zeitpunkten der Aufnahme der beiden Bilder eine mögliche Prüfgaswolke des aus einem Leck ausgetretenen Prüfgases aktiv bewegt wird. Das heißt mit anderen Worten, dass auf den Ort, an dem ein Gasleck vorhanden ist oder vermutet wird und an dem somit eine Prüfgaswolke vorhanden ist oder vermutet wird, beispielsweise ein Gasstoß ausgesendet wird, der eine mögliche Wolke von Prüfgas fortbläst. Dies kann als Druckluftpuls oder auch mit Hilfe eines Ventilators erfolgen. Wichtig ist, dass das Gas, mit dem die Prüfgaswolke bewegt wird, von dem Prüfgas verschieden ist und nicht die gleichen Absorptionsbanden wie das Prüfgas aufweist.

Der Ort, an dem ein Gasleck vorhanden ist oder vermutet wird und an dem somit eine Prüfgaswolke vorhanden ist oder vermutet wird, ist mit anderen Worten ausgedrückt der Ort, an dem die aufgenommene optische Strahlung reflektiert oder emittiert wird oder von dem der Bildausschnitt aufgenommenen wird.

Erfindungsgemäß wird das erste Bild mit dem zweiten Bild der reflektierten oder emittierten optischen Strahlung verglichen, wobei die Signalamplitude der Bildpunkte des ersten und zweiten Bildes der Amplitude des mindestens eines Absorptionswellenlängenbereichs des Prüfgases entsprechen. Hierbei werden ein oder mehrere dynamisch aufeinanderfolgende Bilder mit einem oder mehreren kontinuierlich nacheinander aufgenommenen Bildern verglichen.

Dabei sind vorzugsweise sowohl die Kamera als auch das Objekt fixiert, so dass der Bildausschnitt der nacheinander aufgenommenen Bilder identisch ist.

Erfindungsgemäß gilt ein Leck automatisch dann als detektiert, wenn mindestens die Differenz der Signalamplitude mindestens eines ersten Bildpunktes des ersten Bildes und der Signalamplitude mindestens eines zweiten Bildpunktes des zweiten Bildes einen Schwellenwert übersteigt. Während bei den bekannten Verfahren zur thermografischen Abbildung von Gas lediglich Bilder des Gases aufgenommen und dargestellt werden, erfolgt bei dem erfindungsgemäßen Verfahren eine automatisierte Auswertung der Bildpunktamplituden zur Erkennung eines Lecks. Dadurch kann unabhängig von dem Benutzer und der Entfernung ein Leck detektiert werden.

Mit dem erfindungsgemäßen Verfahren erfolgt eine integrale Beurteilung der Dichtheit eines Prüflings , in dem die Summe aus den Differenzen einander entsprechender Bildpunkte des ersten Bildes und des zweiten Bildes gebildet wird. Das bedeutet, dass die Amplitude eines Bildpunktes $x_{ij}$ mit i=1...n und j=1...m, wobei n, m natürliche Zahlen sind, des ersten Bildes subtrahiert wird von der Amplitude des dem ersten Bildpunkt entsprechenden Bildpunktes $\overline{x_{ij}}$ des zweiten Bildes. Zu dieser Differenz wird die Differenz der Amplituden eines weiteren Bildpunktes, z.B. $x_{i+1,j}$ oder $x_{i, j+1}$ beider Bilder addiert für mehrere Bildpunkte.

Diese Summenbildung kann beispielsweise für sämtliche Bildpunkte innerhalb eines ausgewählten Bereiches erfolgen oder für alle Bildpunkte des gesamten Bildes oder für jeden n-ten Bildpunkt mit n als natürlicher Zahl, erfolgen. Wenn die Summe einen bestimmten Schwellenwert übersteigt, gilt ein Leck als detektiert.

Wenn an dem Ort, an dem die aufgenommene optische Strahlung reflektiert bzw. transmittiert wird, keine Prüfgaswolke vorhanden ist, bewirkt das Aussenden des Gasstoßes auf diesen Ort keine Bewegung einer Prüfgaswolke, so dass die Amplituden der Bildpunkte beider Bilder keine nennenswerten Unterschiede aufweisen. Die Differenz der Bildpunkte liegt dann unterhalb eines geeigneten Schwellenwerts. Sobald jedoch eine Prüfgaswolke an dem Ort vorhanden ist, bewirkt der Gasstoß ein Verschieben dieser Wolke, so dass die Prüfgaswolke in dem ersten Bild an einer anderen Position abgebildet ist als in dem zweiten Bild. Nach Subtraktion der Amplituden der Bildpunkte der beiden Bilder sind aufgrund der verschobenen Prüfgaswolke noch nennenswerte Amplitudenwerte oberhalb des Schwellenwertes vorhanden. Dadurch kann die Differenzbildung der Bildpunktamplituden es ermöglichen, eine Prüfgaswolke zu erkennen.

Der Amplitudenanteil, der aus Hintergrundstrahlung, Hintergrundrauschen oder aus reflektierter Strahlung, die nicht von Prüfgas reflektiert wurde, wird durch die Subtraktion der jeweiligen Bildpunkte vermindert, während die Amplitudenanteile der Absorptionsspektren derjenigen Bildpunkte übrig bleiben, die einem Ort mit Prüfgas entsprechen. Sobald die Summe dieser Amplituden einen bestimmten Wert übersteigt, kann ein Leck als automatisch detektiert gelten. Erfindungsgemäß erfolgt somit also ein automatischer Vergleich mit dem jeweiligen Schwellenwert. Sobald dieser überschritten ist, kann ein Signal generiert und/oder versendet werden, welches die Information "ein Leck ist vorhanden" beinhaltet.

Alternativ oder ergänzend kann auch eine automatisierte Lokalisierung eines Lecks in dem Prüfling erfolgen, nämlich indem die Differenz gebildet wird aus der Amplitude mindestens eines ersten Bildpunktes $x_{ij}$ des ersten Bildes und der Amplitude mindestens eines zweiten, von dem ersten verschiedenen Bildpunktes des ersten Bildes. Die Differenz wird mit einem Schwellenwert verglichen, wobei ein Leck am Ort des ersten Bildpunktes als vorhanden gilt, wenn die Differenz einen Schwellenwert überschreitet. Hierbei können auch die Summen der Amplituden mehrerer Bildpunkte in einem ersten Bereich des ersten Bildes verglichen werden mit den Summen der Amplituden der Bildpunkte in einem zweiten, von dem ersten verschiedenen Bereich des ersten Bildes. Wenn die Differenz der Summen der Amplituden der Bildpunkte aus den beiden Bereichen einen vorgegebenen Schwellenwert überschreitet, gilt ein Leck am Ort des ersten Bereiches als detektiert. Auch in diesem Fall kann ein Signal automatisiert versendet und/oder generiert werden, welches die Information beinhaltet, dass ein Leck detektiert wurde oder als detektiert gilt.

Der Prüfling wird vorzugsweise mit optischer Strahlung bestrahlt, deren Spektrum das Absorptionsspektrum des Prüfgases beinhaltet. In dem Fall, dass es sich bei dem Absorptionsspektrum des Prüfgases um Absorptionswellenlängen im Bereich infraroter Wellenlängen handelt, wird der Prüfling mit Infrarotstrahlung bestrahlt.

Bei der Durchführung des erfindungsgemäßen Verfahrens kann es vorteilhaft sein, wenn der Prüfling und/oder der Ort der Messung am Prüfling von der äußeren Umgebung, z.B. durch Schutzwände, derart abgeschirmt wird, dass Luftbewegungen der äußeren Umgebung von dem Prüfling oder von dem Messort ferngehalten werden.

Zur Bestrahlung des Prüflings kann eine Strahlungsquelle verwendet werden, deren Emissionsspektrum einen großen Teil, wie z.B. mehr als 50 nm oder mehr als 100 nm oder mehrere 100 Nanometer, der infraroten Wärmestrahlung abdeckt, d.h. deren Emissionsspektrum ein thermisches Breitbandspektrum ist. Alternativ kann die Strahlungsquelle eine schmalbandige Strahlungsquelle sein, deren Emissionsspektrum nur einen geringen Teil von wenigen Nanometern oder bis zu 50 nm der Wärmestrahlung abdeckt, wie z.B. ein Laser oder eine LED.

Im Folgenden wird anhand der Figuren ein Ausführungsbeispiel der Erfindung näher erläutert. Es zeigen:

Fig. 1    eine schematische Darstellung des Ausführungsbeispiels und

Fig. 2    eine schematische Darstellung der aufgenommenen Bilder.

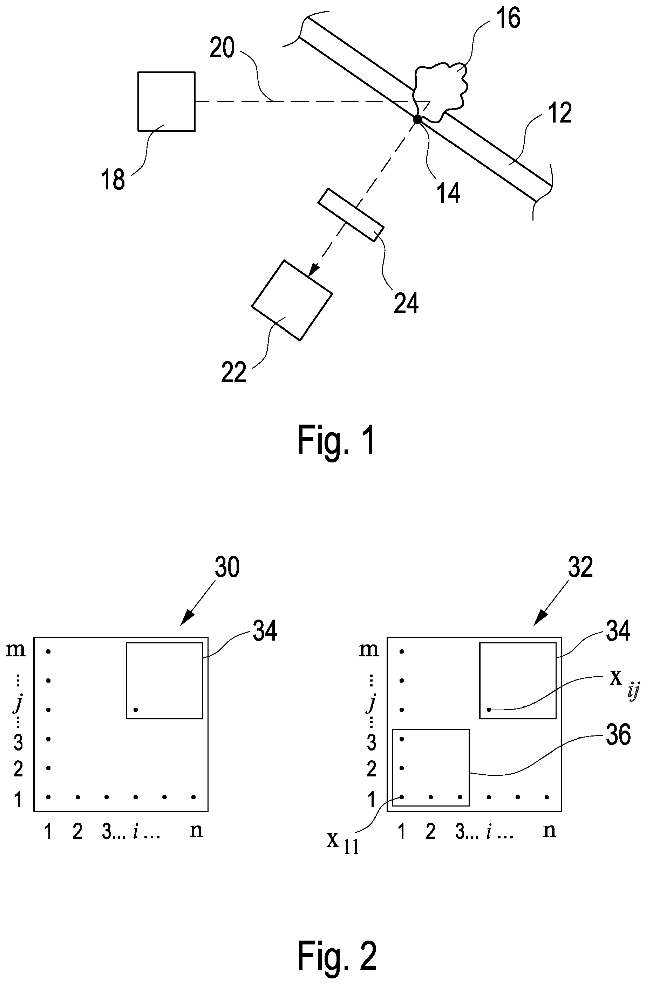

Fig. 1 zeigt einen Prüfling 12 in Form einer Rohrleitung, die ein Gas oder ein Fluid z.B Kältemittel transportiert, das ein Prüfgas beinhaltet oder selbst als Prüfgas verwendet werden kann. Durch ein Leck 14 in dem Prüfling 12 strömt Prüfgas 16 aus und bildet eine Wolke im Bereich des Lecks 14.

Mit einer Strahlungsquelle 18 wird Infrarotstrahlung 20 in Richtung auf den Prüfling 12 emittiert. Die Strahlung 20 wird von dem Prüfling 12 und von Hintergrund des Prüflings reflektiert. Die reflektierte Strahlung 20 wird von einem Sensor 22 aufgenommen, bei dem es sich um den Sensor einer Wärmebildkamera, z.B. in Form eines CCD-Chips, handeln kann. Vor dem Sensor 22 ist ein optisches Filter 24 in dem Strahlengang der reflektierten Wärmestrahlung 20 positioniert.

In Fig. 2 sind ein erstes Bild 30 und ein zweites Bild 32 der von dem Sensor 22 aufgenommenen Strahlung 20 dargestellt. Beide Bilder 30, 32 weisen eine gleiche Anzahl an Bildpunkten $x_{ij}$ auf, wobei i=1...n mit n als natürlicher Zahl und j=1...m mit m als natürlicher Zahl. Jedes der beiden Bilder 30, 32 besteht also aus n-Spalten und m-Zeilen. Bei einem Vergleich der beiden Bilder können die Bildpunkte in einem ersten Bereich 34 des ersten Bildes 30 mit den Bildpunkten in einem dem ersten Bereich 34 entsprechenden Bereich 34 des zweiten Bildes 32 verglichen werden. Alternativ oder ergänzend können auch die Bildpunkte des ersten Bereichs 34 eines der Bilder mit den Bildpunkten eines zweiten, von dem ersten Bereich 34 verschiedenen Bereichs 36 verglichen werden. Dieser Bereich kann zur Lokalisation eines Lecks angewendet werden.

Insbesondere kann der Vergleich der Bildpunkte $x_{ij}$ , $\overline{x_{ij}}$ der beiden Bilder 30, 32 anhand des Terms

$$\sum_{i,j=1}^{n,m} \left( x_{ij} - \overline{x_{ij}} \right)$$

oder anhand des Terms

$$\sum_{i,j=1}^{n,m} \left| x_{ij} - \overline{x_{ij}} \right|.$$

erfolgen. Hierbei ist $x_{ij}$ ein Bildpunkt des ersten Bildes am Ort der Spalte i und der Zeile j, während $\overline{x_{ij}}$ ein dem Ort des ersten Bildpunktes entsprechender Bildpunkt des zweiten Bildes ist, d.h. ein Bildpunkt des zweiten Bildes am Ort der Spalte i und der Zeile j.

Wenn dieser Term einen bestimmten Schwellenwert überschreitet, wird ein Leck als detektiert angesehen. Dabei kann ein Signal generiert und/oder ausgegeben werden, welches angibt, dass ein Leck vorhanden ist oder detektiert wurde.

Gegenüber dem Stand der Technik bietet das erfindungsgemäße Verfahren den Vorteil einer automatisierten Leckdetektion eines Prüflings durch Aufnehmen und Auswerten digitaler Bilder des Prüflings, ohne dass die Auswertung dabei einen menschlichen Betrachter der aufgenommenen Bilder überlassen bleibt. Insbesondere kann das erfindungsgemäße Verfahren oder zumindest das Vergleichen der aufgenommenen Bilder und Bildpunkte und das Auswerten der Bildpunkte computergesteuert oder von einem Mikroprozessor ausgeführt werden.

**Patentansprüche**

1.  Verfahren zur Detektion einer aus einem Leck in einem Prüfling (12) ausgetretenen Prüfgaswolke (16), mit den Schritten:

    Aufnehmen von von dem Prüfling (12) oder dessen Hintergrund reflektierter oder emittierter optischer Strahlung (20) zu einem ersten Zeitpunkt mit einem optischen Sensor (22), der dazu ausgebildet ist, mindestens eine Wellenlänge oder einen Wellenlängenbereich des optischen Absorptionsspektrums des Prüfgases (16) zu erfassen,
    Erstellen eines ersten digitalen Bildes (30) aus der zu dem ersten Zeitpunkt aufgenommenen optischen Strahlung (20) derart, dass die Signalamplituden der Bildpunkte $x_{ij}$ der Amplitude mindestens eines Absorptionswellenlängenbereichs des Prüfgases (16) entsprechen,

Aufnehmen von von dem Prüfling (12) oder dessen Hintergrund reflektierter oder emitierter optischer Strahlung (20) zu dem zweiten Zeitpunkt mit dem optischen Sensor (22),

Erstellen eines zweiten digitalen Bildes (32) aus der zu dem zweiten Zeitpunkt aufgenommenen optischen Strahlung (20) derart, dass die Signalamplituden der Bildpunkte $\overline{x_{ij}}$ der Amplitude mindestens eines Absorptionswellenlängenbereichs des Prüfgases (16) entsprechen,

Vergleichen des ersten Bildes (30) mit mindestens einem von dem ersten Bild verschiedenen zweiten digitalen Bildes (32) der reflektierten optischen Strahlung,

wobei ein Leck (14) als detektiert gilt, wenn mindestens die Differenz der Amplitude mindestens eines ersten Bildpunktes $x_{ij}$ des ersten Bildes (30) und der Amplitude mindestens eines zweiten Bildpunktes $\overline{x_{ij}}$ des zweiten Bildes (32) einen Schwellenwert überschreitet,

wobei

i, j jeweils natürliche Zahlen,

$x_{ij}$ ein Bildpunkt am Ort der Spalte i und der Zeile j des ersten Bildes (30) und

$\overline{x_{ij}}$ ein Bildpunkt am Ort der Spalte i und der Zeile j des zweiten Bildes (32)

sind,

**dadurch gekennzeichnet,**

**dass** zur integralen Beurteilung der Dichtheit des Prüflings (12) die Summe gebildet wird aus den Differenzen der Amplituden einander entsprechender Bildpunkte $x_{ij}$ des ersten Bildes (30) und $\overline{x_{ij}}$ des zweiten Bildes (32), wobei ein Leck (14) als detektiert gilt, wenn die Summe den Schwellenwert überschreitet.

2. Verfahren nach Anspruch 1, **dadurch gekennzeichnet, dass** ein Gasstoß nach der Aufnahme eines Bildes zum ersten Zeitpunkt und vor der Aufnahme eines zweiten Bildes zu einem von dem ersten Zeitpunkt verschiedenen zweiten Zeitpunkt in Richtung des Orts ausgesendet wird, von dem der Bildausschnitt aufgenommenen wird.

3. Verfahren nach Anspruch 1 oder 2, **dadurch gekennzeichnet, dass** der optische Sensor (22) und der Prüfling (12) räumlich derart fixiert sind, dass die Bildausschnitte der aufgenommenen Bilder nahezu identisch sind.

4. Verfahren nach Anspruch einem der vorhergehenden Ansprüche, **dadurch gekennzeichnet, dass** zur Lokalisierung eines Lecks (14) in dem Prüfling (12) die Differenz gebildet wird aus der Amplitude mindestens eines ersten Bildpunktes $x_{ij}$ des ersten Bildes (30) und der Amplitude mindestens eines zweiten Bildpunktes des ersten Bildes (30), wobei ein Leck (14) am Ort des ersten Bildpunktes $x_{ij}$ als detektiert gilt, wenn die Differenz einen Schwellenwert überschreitet.

5. Verfahren nach einem der vorhergehenden Ansprüche, **dadurch gekennzeichnet, dass** der Prüfling (12) mit optischer Strahlung (20) bestrahlt wird, deren Spektrum mindestens einen Teil des Absorptionsspektrums des Prüfgases (16) beinhaltet.

6. Verfahren nach einem der vorhergehenden Ansprüche, **dadurch gekennzeichnet, dass** die von dem Prüfling (12) reflektierte, aufzunehmende optische Strahlung mit einem optischen Filter (24) gefiltert wird, dessen Durchlassbereich mindestens eine Absorptionswellenlänge des optischen Absorptionsspektrums des Prüfgases (16) beinhaltet.

7. Verfahren nach einem der vorhergehenden Ansprüche, **dadurch gekennzeichnet, dass** während der Messung der Prüfling (12) von der Umgebung derart abgeschirmt wird, dass Luftbewegungen in der Umgebung von dem Prüfling (12) ferngehalten werden.

8. Verfahren nach einem der vorhergehenden Ansprüche, **dadurch gekennzeichnet, dass** der Prüfling (12) mit einer Strahlungsquelle (18) bestrahlt wird, deren Emissionsspektrum einen großen Teil der infraroten Wärmestrahlung abdeckt, wie zum Beispiel einer Halogenlampe, einer Glühlampe, einem Heizstrahler oder einer Blitzlampe.

9. Verfahren nach einem der vorhergehenden Ansprüche, **dadurch gekennzeichnet, dass** der Prüfling (12) mit einer schmalbandigen Strahlungsquelle (18) bestrahlt wird, deren Emissionsspektrum nur einen geringen Teil der Wärmestrahlung abdeckt, wie zum Beispiel einem Laser oder einer LED.

10. Verfahren nach einem der vorhergehenden Ansprüche, **dadurch gekennzeichnet, dass** die Bildpunkte $x_{ij}$ der beiden Bilder (30, 32) anhand des Terms

$$\sum_{i,j=1}^{n,m} \left( x_{ij} - \overline{x_{ij}} \right)$$

miteinander verglichen werden, wobei
i, j, n, m jeweils natürliche Zahlen,
$x_{ij}$ ein Bildpunkt am Ort der Spalte i und der Zeile j des ersten Bildes (30) und

$\overline{x_{ij}}$ ein Bildpunkt am Ort der Spalte i und der Zeile j des zweiten Bildes (32) sind.

## Claims

1. A method for detecting a test gas cloud (16) escaping from a leak in a test specimen (12), comprising the following steps:

   receiving optical radiation (20) reflected or emitted from the test specimen (12) or its background at a first point in time with an optical sensor (22) configured to detect at least one wavelength or a wavelength range of the optical absorption spectrum of the test gas (16),
   creating a first digital image (30) from the optical radiation (20) received at the first point in time such that the signal amplitudes of the image points $x_{ij}$ correspond to the amplitude of at least one absorption wavelength range of the test gas (16),
   receiving optical radiation (20) reflected or emitted from the test specimen (12) or its background at the second point in time by means of the optical sensor (22),
   creating a second digital image (32) from the optical radiation (20) received at the second point in time such that the signal amplitudes of the image points $\overline{x_{ij}}$ correspond to the amplitude of at least one absorption wavelength range of the test gas (16),
   comparing the first image (30) with at least one second digital image (32) of the reflected optical radiation, which is different from the first image, wherein a leak (14) is considered detected when at least the difference of the amplitude of at least a first image point $x_{ij}$ of the first image (30) and the amplitude of at least a second image point $\overline{x_{ij}}$ of the second image (32) exceeds a threshold value, wherein

   i, j are each natural numbers
   $x_{ij}$ is an image point at the location of column i and row j of the first image (30), and
   $\overline{x_{ij}}$ is an image point at the location of column i and row j of the second image (32)

   **characterized in that**
   for integral evaluation of the tightness of the test specimen (12), the sum is formed from the differences of the amplitudes of mutually corresponding image points $x_{ij}$ of the first image (30) and $\overline{x_{ij}}$ of the second image (32), a leak (14) being regarded as detected if the sum exceeds the threshold value.

2. The method according to claim 1, **characterized in that** a gas shock is emitted after capturing an image at the first point in time and before capturing a second image at a second point in time different from the first point in time, in the direction of the location from which the image section is captured.

3. The method according to claim 1 or 2, **characterized in that** the optical sensor (22) and the test specimen (12) are spatially fixed such that the image sections of the captured images are almost identical.

4. The method according to any one of the preceding claims, **characterized in that**, for localizing a leak (14) in the test specimen (12), the difference is formed from the amplitude of at least a first image point $x_{ij}$ of the first image (30) and the amplitude of at least a second image point of the first image (30), a leak (14) at the location of the first image point $x_{ij}$ being regarded as detected if the difference exceeds a threshold value.

5. The method according to any one of the preceding claims, **characterized in that** the test specimen (12) is irradiated with optical radiation (20) whose spectrum includes at least a part of the absorption spectrum of the test gas (16).

6. The method according to any one of the preceding claims, **characterized in that** the optical radiation reflected by the test specimen (12) and to be received is filtered with an optical filter (24) whose passband includes at least one absorption wavelength of the optical absorption spectrum of the test gas (16).

7. The method according to any one of the preceding claims, **characterized in that** during the measurement the test specimen (12) is shielded from the environment in such a way that air movements in the environment are kept away from the test specimen (12).

8. The method according to any one of the preceding claims, **characterized in that** the test specimen (12) is irradiated with a radiation source (18) whose emission spectrum covers a large part of the infrared thermal radiation, such as a halogen lamp, an incandescent lamp, a radiant heater or a flash lamp.

9. The method according to any one of the preceding claims, **characterized in that** the test specimen (12) is irradiated with a narrow-band radiation source (18) whose emission spectrum covers only a small part of the thermal radiation, such as a laser or an LED.

10. The method according to any one of the preceding claims, **characterized in that** the image points $x_{ij}$ of

the two images (30, 32) are compared with each other using the term

$$\sum_{i,j=1}^{n,m} \left( x_{ij} - \overline{x_{ij}} \right)$$

wherein

i, j, n, m are each natural numbers,

$x_{ij}$ is an image point at the location of column i and row j of the first image (30), and

$\overline{x_{ij}}$ is an image point at the location of column i and row j of the second image (32).

**Revendications**

1. Procédé de détection d'un nuage de gaz d'essai (16) s'échappant d'une fuite dans un échantillon (12), comprenant les étapes consistant à :

   enregistrer le rayonnement optique (20) réfléchi ou émis par l'échantillon (12) ou son arrière-plan à un premier instant avec un capteur optique (22) conçu pour détecter au moins une longueur d'onde ou une plage de longueurs d'onde du spectre d'absorption optique du gaz d'essai (16),

   générer une première image numérique (30) à partir du rayonnement optique (20) enregistré au premier instant de façon telle que les amplitudes de signal des pixels $x_{ij}$ correspondent à l'amplitude d'au moins une plage de longueurs d'onde d'absorption du gaz d'essai (16),

   enregistrer le rayonnement optique (20) réfléchi ou émis par l'échantillon (12) ou son arrière-plan au second instant, avec le capteur optique (22),

   générer une seconde image numérique (32) à partir du rayonnement optique (20) enregistré au second instant de façon telle que les amplitudes de signal des pixels $\overline{x_{ij}}$ correspondent à l'amplitude d'au moins une plage de longueurs d'onde d'absorption du gaz d'essai (16),

   comparer la première image (30) avec au moins une seconde image numérique (32) du rayonnement optique réfléchi différente de la première image,

   dans lequel une fuite (14) est considérée comme détectée si au moins la différence entre l'amplitude d'au moins un premier pixel $x_{ij}$ de la première image (30) et l'amplitude d'au moins un second pixel $\overline{x_{ij}}$ de la seconde image (32) dépasse une valeur de seuil,

   où

   i, j sont respectivement des entiers naturels,

   $x_{ij}$ est un pixel situé à l'emplacement de la colonne i et de la ligne j de la première image (30) et $\overline{x_{ij}}$ est un pixel situé à l'emplacement de la colonne i et de la ligne j de la seconde image (32), **caractérisé en ce que**,

   en vue de l'évaluation intégrale de l'étanchéité de l'échantillon (12), on forme la somme des différences d'amplitudes des pixels $x_{ij}$ de la première image (30) et $\overline{x_{ij}}$ de la seconde image (32) correspondant les uns aux autres, une fuite (14) étant considérée comme détectée lorsque la somme dépasse la valeur de seuil.

2. Procédé selon la revendication 1, **caractérisé en ce qu'**une impulsion de gaz est émise en direction de l'emplacement à partir duquel le fragment d'image est enregistré après l'enregistrement d'une image au premier instant et avant l'enregistrement d'une seconde image à un second instant différent du premier instant.

3. Procédé selon la revendication 1 ou 2, **caractérisé en ce que** le capteur optique (22) et l'échantillon (12) sont immobilisés spatialement de façon telle que les fragments d'image des images enregistrées sont presque identiques.

4. Procédé selon l'une des revendications précédentes, **caractérisé en ce que**, afin de localiser une fuite (14) dans l'échantillon (12), on calcule la différence de l'amplitude d'au moins un premier pixel $x_{ij}$ de la première image (30) et de l'amplitude d'au moins un second pixel de la première image (30), une fuite (14) à l'emplacement du premier pixel $x_{ij}$ étant considérée comme détectée lorsque la différence dépasse une valeur de seuil.

5. Procédé selon l'une des revendications précédentes, **caractérisé en ce que** l'échantillon (12) est irradié avec un rayonnement optique (20) dont le spectre contient au moins une partie du spectre d'absorption du gaz d'essai (16).

6. Procédé selon l'une des revendications précédentes, **caractérisé en ce que** le rayonnement optique réfléchi par l'échantillon (12) à enregistrer est filtré avec un filtre optique (24) dont la bande passante contient au moins une longueur d'onde d'absorption du spectre d'absorption optique du gaz d'essai (16).

7. Procédé selon l'une des revendications précédentes, **caractérisé en ce que**, pendant la mesure, l'échantillon (12) est protégé de l'environnement de façon telle que des mouvements d'air de l'environnement sont tenus à l'écart de l'échantillon (12).

8. Procédé selon l'une des revendications précédentes, **caractérisé en ce que** l'échantillon (12) est irradié avec une source de rayonnement (18) dont le spectre d'émission couvre une grande partie du rayonnement thermique infrarouge, comme, par exemple, une lampe halogène, une lampe à incandescence, un radiateur à infrarouge ou une lampe flash.

9. Procédé selon l'une des revendications précédentes, **caractérisé en ce que** l'échantillon (12) est irradié avec une source de rayonnement à bande étroite (18) dont le spectre d'émission ne couvre qu'une petite partie du rayonnement thermique, comme, par exemple, un laser ou une DEL.

10. Procédé selon l'une des revendications précédentes, **caractérisé en ce que** les pixels $x_{ij}$ des deux images (30, 32) sont comparés les uns aux autres à l'aide de l'expression

$$\sum_{i,j=1}^{n,m} \left( x_{ij} - \overline{x_{ij}} \right)$$

où

i, j, n, m sont respectivement des entiers naturels,
$x_{ij}$ est un pixel situé à l'emplacement de la colonne i et de la ligne j de la première image (30) et $\overline{x_{ij}}$ est un pixel situé à l'emplacement de la colonne i et de la ligne j de la seconde image (32).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030025081 A
- WO 201845107 A1
- EP 3392635 A1
- EP 3351916 A1
- US 20190078966 A1
- US 5523569 A
- US 10031040 B1